# EUROPEAN PATENT SPECIFICATION

(11) **EP 2 743 854 B1**
(45) Date of publication and mention of the grant of the patent: **26.12.2018**
(21) Application number: 12822530.7
(22) Date of filing: 03.07.2012
(51) Int. Cl.: G06F 21/56

(54) **CLUSTERING PROCESSING METHOD AND DEVICE FOR VIRUS FILES**
CLUSTERING-VERARBEITUNGSVERFAHREN UND -VORRICHTUNG FÜR VIRUSDATEIEN
PROCÉDÉ ET DISPOSITIF POUR LE PARTITIONNEMENT DES FICHIERS DE VIRUS

(30) Priority: 09.08.2011 CN 201110226879
(43) Date of publication of application: 18.06.2014
(73) Proprietor: Tencent Technology (Shenzhen) Company Limited, Guangdong 518057 (CN)
(72) Inventor: YU, Tao, Shenzhen Guangdong 518057 (CN)
(74) Representative: Epping - Hermann - Fischer
(86) International application number: PCT/CN2012/078104
(87) International publication number: WO 2013/020426

(56) References cited:
- WO-A1-00/02138
- CN-A- 101 604 363
- CN-A- 101 604 365
- KR-A- 20090 055 669
- SHUGANG TANG: "The Detection of Trojan Horse Based on the Data Mining", FUZZY SYSTEMS AND KNOWLEDGE DISCOVERY, 2009. FSKD '09. SIXTH INTERNATIONAL CONFERENCE ON, IEEE, PISCATAWAY, NJ, USA, 14 August 2009 (2009-08-14), pages 311-314, XP031583791, ISBN: 978-0-7695-3735-1
- JING, RUI: 'Research and Implementation of Malicious Code Detection System' CHINESE MASTER'S THESES FULL-TEXT DATABASE INFORMATION SCIENCE AND TECHNOLOGY vol. 2011, no. 4, April 2011, pages 5 - 42, XP008171957

## Description

### TECHNICAL FIELD

The present disclosure relates to the field of computer data processing, and particularly to a cluster classification method for performing cluster classification on computer virus files and a device thereof

### BACKGROUND

Computer viruses generally have family characteristics, and one certain computer virus may evolve into a variant virus. The variation of virus is targeted for the anti-antivirus process in some antivirus software. Generally, such viruses and their derived viruses have family characteristics. Anti-virus software may classify virus families according to the family characteristics of the viruses, in which the common feature shared by all viruses of the family is extracted as the criteria for virus determination, allowing hitting all of the viruses in the family by only one record in the virus library. It can be seen that an accurate clustering of virus families may substantially enhance the killing efficiency of the antivirus software and reduce the size of the virus library.

The existing cluster classification of viruses is mainly performed in a manual way, in which it is needed to dynamically run virus files, manually record and analyze the dynamic behavior features of the viruses, such as the sequence for calling application programming interfaces (APIs) of the system, whether to modify the registry and whether to create a file at a sensitive position, and then manual cluster classification is performed by accounting these dynamic behavior features.

The disadvantages of the existing method for manually performing cluster classification of viruses lie in that:
a lot of human resources are needed, meanwhile virus analysts should be very experienced; in the cluster classification of the viruses, it is required to dynamically run the virus files to observe the dynamic behavior features of the virus files, which not only increases consumption in time and computer resources, but also increases risks of virus infection in the local computer during dynamically running of the virus files.
Shugang Tang: "The Detection of Trojan Horse Based on the Data Mining", fuzzy systems and knowledge discovery, 2009, FSKD '09, sixth international conference on, IEEE, Piscataway, NJ, USA, 2009-08-14, pages 311-314, discloses a method of Trojan horse detection based on static attributes of portable executable files, wherein intelligent information processing techniques are used to analyze those static attributes, such as decision tree, BP network and finite state machine. Further, a detection model is established to estimate whether a PE file is a Trojan horse.
KR 2009 0055669 A discloses a method for detecting a virus code by use of a file analyzer and a classification unit.

### SUMMARY OF THE DISCLOSURE

The embodiments of the present disclosure can provide a method and a device for cluster classifying virus files, so as to enhance the efficiency for the cluster classification of computer virus files, reduce resource consumption, and avoid the risk of virus infection caused by dynamical running of the virus files. The invention is as defined in the appended claims.

The present disclosure provides at least the following technical solutions.

A method for cluster classifying portable executable, PE, virus files, including:
A. statically analyzing binary data of virus files which need to be classified to obtain portable executable (PE) structure data of the virus files;
B. comparing the PE structure data of the virus files which need to be classified and classifying virus files which have PE structure data meeting a specified similarity condition into a same category; and
C: performing a secondary cluster classification on the virus files in each of the categories classified in the step B, wherein for the virus files in a same category classified in the step B, the secondary cluster,classification comprises:
   C1: statically analyzing binary data of each of the virus files to obtain section data of each virus file;
   C2: performing block-division on the section data of each virus file with a same block division mode, and calculating a hash value of each section data block; and
   C3: comparing the hash values of the section data blocks for the virus files, and classifying virus files of which the hash values of the section data blocks have a specified hash similarity into a secondary category, wherein the similarity is represented by the number of the data blocks same for the two compared objects, or by the number of the consecutive data blocks same for the two compared objects.

A device for cluster classifying portable executable, PE, virus files, including:
a first data analyzing module, configured to statically analyze binary data of the virus files which need to be classified to extract PE structure data of the virus files;
a first cluster classification module, configured to compare the PE structure data of the virus files which need to be classified, and to classify virus files which have PE structure data meeting a specified similarity condition into a same category; and
a second data analysis module, configured to statically analyze binary data of each of the virus files to obtain section data of the virus files;
a block-division module, configured to perform block-division on the section data of each virus file with a same block division mode, and to calculate a hash value of each section data block; and
a second cluster classification module, configured to compare the hash values of the section data blocks of the virus files, and to classify virus files of which the hash values of the section data blocks have a specified hash similarity into a secondary category, wherein the similarity is represented by the number of the data blocks same for the two compared objects, or by the number of the consecutive data blocks same for the two compared objects.

Compared with the manual classification in the prior art, the process according to the present disclosure can be performed automatically by a computer to analyze the binary data of the virus files and perform the cluster classification based on the binary data. Thus the efficiency for the cluster classification of computer virus files may be improved, and the resource consumption, including the consumption for human resources, time resources, computer resources and so on, may be reduced.

Compared with the mode in which the cluster classification is performed by dynamical running of the virus files in the prior art, in the present disclosure a static analysis is utilized to compare the binary portable executable (PE) structure data of the virus files or further perform blocked hash comparison on section data, and then the virus files having a specified similarity are classified into the same category. Hence the dangers of virus infection caused by dynamical running of the virus files may be avoided.

### BRIEF DESCRIPTION OF THE DRAWINGS

To illustrate the technical solutions of the embodiments of the present disclosure more clearly, the drawings to be used in the description of the embodiments will be simply introduced below. Obviously, the drawings described in the following are just illustration of some embodiments of the present disclosure, and other drawings may be obtained by those skilled in the art in light of these drawings without any creative labor.
Figure 1 is a schematic structural diagram of a PE file;
Figure 2 is a flow chart of a method for cluster classifying virus files according to the present disclosure;
Figure 3 is a flow chart of a method for cluster classifying virus files, which includes a secondary cluster classification, according to the present disclosure;
Figure 4 is a schematic diagram showing block-division processing and hash calculation made to section data of virus files;
Figure 5 is a schematic diagram showing the result after the cluster classification has been performed twice on the virus files;
Figure 6 is a schematic diagram of a device for cluster classifying virus files according to the present disclosure; and
Figure 7 is a schematic diagram of a device for cluster classifying virus files, which includes a secondary cluster classification function, according to the present disclosure.

### DETAILED DESCRIPTION OF THE DISCLOSURE

In the following, the technical solutions of the embodiments of the present invent will be clearly and completely described in combination with the drawings. Obviously, the described embodiments are just some of the embodiments of the present disclosure, but not all of the embodiments. Any other embodiments obtained by those skilled in the art based on the embodiments of the present disclosure without any creative labor fall within the scope of protection of the present disclosure.

Next, the present disclosure will be further illustrated in details in combination with the drawings and specific embodiments.

A virus file, which is expressed in a form of binary data, is one type of computer files. In the present disclosure, by analyzing the features of the binary data of the virus files and the features of the virus family characteristics, it is proposed a method for cluster classifying virus files which may be performed by a computer automatically and a device for cluster classifying virus files.

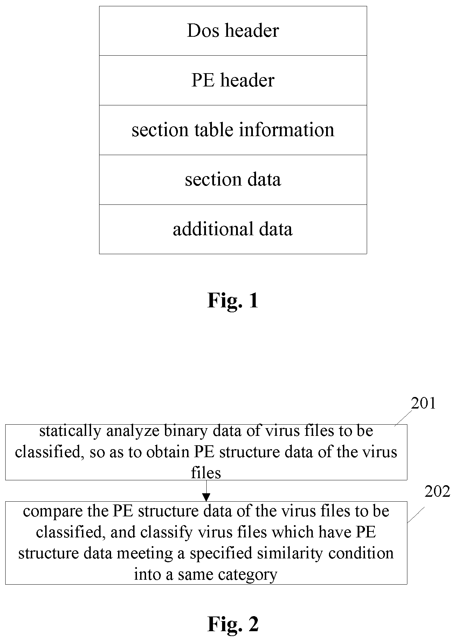

In WINDOWS operating system, a virus file is generally a portable executable (PE) file. Figure 1 is a schematic structural diagram of a PE file. Referring to Figure 1, the PE file generally includes DOS header, PE header, section table information, section data and additional dada. The DOS header, the PE header and the section table information belong to PE structure data for identifying the structural feature of the PE file. The virus file which has the function of anti-antivirus, is featured in the modification made in some portions of section data in the PE file. Virus files of this type often have same or similar PE structure data. Therefore, according to the present disclosure, the cluster classification of the virus files may be performed according to the PE structure data of the virus files.

Figure 2 is a flow chart of a method for cluster classifying virus files according to the present disclosure. Referring to Figure 2, the process includes:
step 201, statically analyzing binary data of virus files which need to be classified to obtain the PE structure data of the virus files; and
step 202, comparing the PE structure data of the virus files which need to be classified, and classifying virus files which have PE structure data meeting a specified similarity condition into a same category.

The similarity indicates the degree of analogy between data of two compared objects. For example, the similarity may be represented by a percentage that the amount of the data same for the two compared objects accounts for the total amount of the data; the similarity may also be represented by a ratio of the consecutive bytes that are the same for the two compared objects; and after performing block-division processing on the two compared objects, the similarity may also be represented by the number of the data blocks same for the two compared objects, or by the number of the consecutive data blocks same for the two compared objects.

In the present disclosure, the PE structure data used for comparison is any one of the DOS header, the PE header and the section table information or any combination thereof.

One implementation of the step 202 includes the following step 221 to step 223:
step 221, setting a first virus file as a central file of a new category;
step 222, comparing the PE structure data of a next virus file with the PE structure data of the central files of respective categories in sequence (if there is only one category, just comparing the PE structure data of a next virus file with the central file of the only one category), and if the PE structure data of the next virus file has the specified similarity with the PE structure data of the central file of one category, for example, if the percentage that the number of the same bytes, obtained by analyzing the bytes of the PE structure data, accounts for the total number of bytes exceeds a threshold, which means meeting of the specified similarity, classifying the next virus file into the one category and performing step 223, or if the ratio of the consecutive types same in the PE structure data exceeds a threshold, which means meeting of the specified similarity, classifying the next virus file into the category and performing step 223; and if the PE structure data of the next virus file does not have the specified similarity with the PE structure data of the central file of any one of the categories, setting the next virus file as the central file of a new category and performing step 223; and
step 223, determining whether there is an additional next virus file, if there is a next virus file, then returning to the step 222; otherwise, ending this process.

For example, assuming that there are N virus files which need to be classified, a first virus file is firstly set as the central file of a new category. A second virus file is compared with the first virus file; if the PE structure data of the second virus file has the specified similarity with that of the first virus file, then the second virus file is classified into the same category as the first virus file, otherwise the second virus file is set as the central file of a new category. Here, assuming that the similarity between the PE structure data of the first virus and the PE structure data of the second virus file does not meet the specified similarity and the second virus file is set as the central file of a new category, a third virus file is compared with the first virus file and the second virus file in sequence, and is classified into the corresponding category of the virus file of which the PE structure data has the specified similarity with the PE structure data of the third virus file.

If the similarity between the PE structure data of the second virus file and the PE structure data of the first virus file meets the specified similarity, the second virus file is classified into the same category as the first virus file. Thereafter, the third virus file is compared with the central file of the category, i.e., the first virus file, but not be compared with other virus files (such as the second virus file) in the category.

The subsequent virus files may be processed in the same manner, until the processing for all of the N virus files is finished.

In the processing described above, if the number of the virus files in a category exceeds a specified value, for example, 3, and is smaller than another specified value, for example, 10, the central file of the category should be re-determined. That is, the step 202 further includes: determining whether the number of the virus files in respective categories is within a specified numeric range (for example, greater than or equal to 3 and smaller than 10), and if the number of the virus files in a category is within the specified numeric range, re-determining the central file of the category.

The method for re-determining the central file of the category includes: obtaining the similarities between the PE structure data of respective virus files in the category; obtaining a sum of similarity by adding the similarities between the PE structure data of each virus file and the PE structure data of other virus files; and setting the virus file having the maximum sum of similarity as the central file of the category.

Through the above processing, the cluster classification is performed for the virus files. In addition, according to the present disclosure, a secondary cluster classification may be performed for the virus files in each of the categories classified in the above way, to further refine the categories of the virus files and increase the similarity between the virus files in each category.

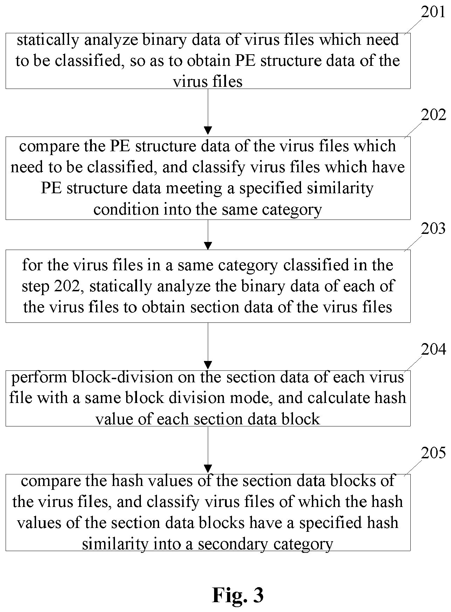

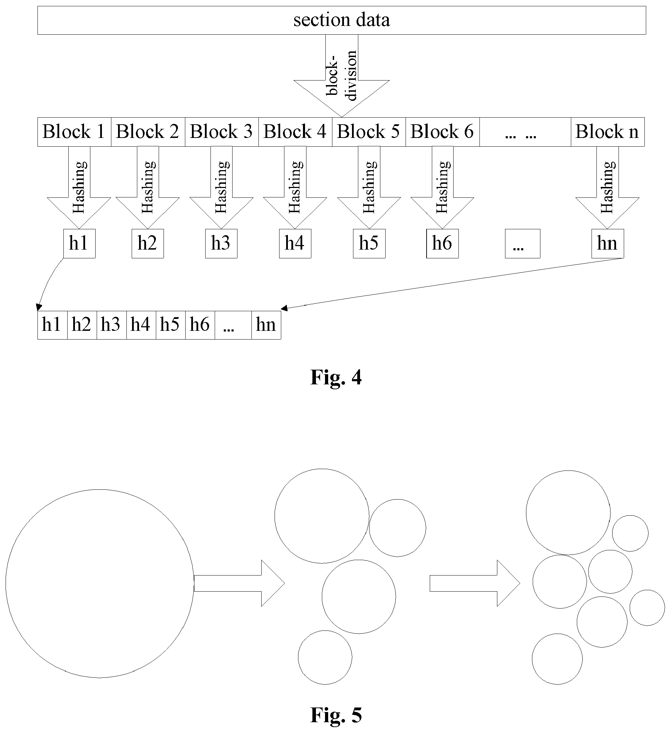

Figure 3 is a flow chart of a method for cluster classifying virus files, which includes a secondary cluster classification, according to the present disclosure; and Figure 4 is a schematic diagram showing the block-division processing and hash calculation made to the section data of the virus files. Referring to Figure 3 and Figure 4, the flow chart includes the steps 201 and 202 in Figure 1, and after the step 202, for the virus files in each of the categories classified in the step 202, the method further includes:
step 203, for the virus files in a same category classified in the step 202, statically analyzing the binary data of each of the virus files to obtain section data of the virus files;
step 204, performing block-division on the section data of each virus file with a same block division mode, and calculating hash value of each section data block, for example, in Figure 4 n section data blocks are obtained and the corresponding hash values are h1, h2, h3,..., hn, respectively; and
step 205, comparing the hash values of the section data blocks for the virus files, and classifying virus files of which the hash values of the section data blocks have a specified hash similarity into a secondary category.

The step 205 includes:
step 251, setting a first virus file among the virus files in the category as the central file of a new secondary category;
step 252, comparing the hash values of the section data blocks of a next virus file with the hash values of the section data blocks of the central files of respective secondary categories in sequence (if there is only one secondary category, comparison is performed with the central file of the only one secondary category), and if the hash values of the section data blocks of the next virus file have the specified hash similarity with the hash values of the section data blocks of the central file of a secondary category, classifying the next virus file into this secondary category and performing step 253; if the hash values of the section data blocks of the next virus file do not have the specified hash similarity with the hash values of the section data blocks of the central file of a secondary category, setting the next virus file as the central file of a new secondary category and performing step 253; and
step 253, determining whether there is an additional next virus file, if there is a next virus file, returning to the step 252; otherwise, ending the process of step 205.

In the processing described above, if the number of the virus files in a secondary category exceeds a specified value, for example, 3, and is smaller than another specified value, for example, 10, the central file of the secondary category should be re-determined. That is, the step 205 further includes: determining whether the number of the virus files in respective secondary categories is within a specified numeric range (for example, greater than or equal to 3 and smaller than 10), if the number of the virus files in a secondary category is within the specified numeric range, re-determining the central file of the secondary category.

The method for re-determining the central file of the secondary category includes:
obtaining the similarities between the hash values of the section data blocks of respective virus files in the secondary category; obtaining a sum of hash similarity by adding the similarities between the hash values of the section data blocks of each virus file and the hash values of the section data blocks of other virus files; and setting the virus file having the maximum sum of hash similarity as the central file of the secondary category.

In the process of performing the secondary cluster classification, the method for determining whether the hash values of the section data blocks of the virus files have includes:

comparing hash values of corresponding section data blocks for two virus files, for example, as shown in Figure 4, comparing the values of h1, h2, h3,..., hn of the two virus files, to determine the section blocks of which the hash values are the same between the two virus files and to determine the number of the determined section data blocks; and if the number of the section data blocks having the same hash value exceeds a specified threshold (for example, 10), determining that the hash values of the section data blocks of the two virus files have the specified hash similarity. Alternatively, it is possible to determine whether the number of the consecutive section data blocks for which the hash values are the same between the two virus files exceeds a specified threshold, and if the number of the consecutive section data blocks exceeds the specified threshold, it is determined that the similarity between the hash values of the section data blocks for the two virus files meets the specified hash similarity.

Figure 5 is a schematic diagram showing the result after the cluster classification has been performed twice on the virus files. As shown in Figure 5, after the secondary cluster classification of the present disclosure, the similarity between virus files in each category is higher, and the virus files in the same category may be considered as files in the same family.

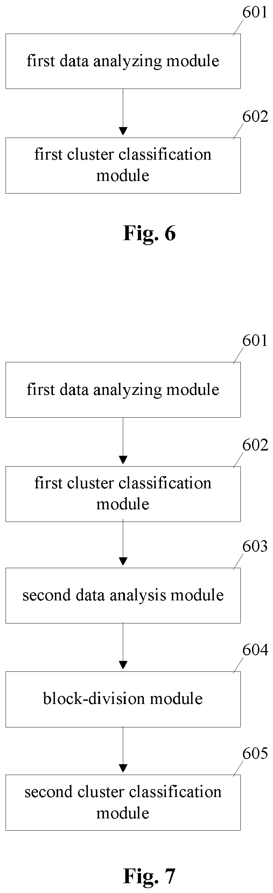

Figure 6 is a schematic diagram of a device for cluster classifying virus files according to the present disclosure. Referring to Figure 6, the device includes:
a first data analyzing module 601, configured to statically analyze binary data of virus files which need to be classified to extract PE structure data of the virus files; and
a first cluster classification module 602, configured to compare the PE structure data of the virus files which need to be classified, and to classify virus files which have PE structure data meeting a specified similarity condition into a same category.

Figure 7 is a schematic diagram of a device for cluster classifying virus files, which includes secondary cluster classification function, according to the present disclosure. Referring to Figure 7, in addition to the modules shown in Figure 6, the device further includes:
a second data analysis module 603, configured to statically analyze the binary data of each of the virus files to obtain section data of the virus files; and
a block-division module 604, configured to perform block-division on the section data of each virus file with a same block division mode, and to calculate hash value of each section data block; and
a second cluster classification module 605, configured to compare the hash values of the section data blocks for the virus files, and to classify virus files of which the hash values of the section data blocks have a specified hash similarity into a secondary category.

The above are just the preferable embodiments of the present disclosure, and the protection scope of the present disclosure is not limited thereto. Variations or alternations, which can be easily made by those skilled in the art within the technical scope disclosed by the present disclosure, should fall within the scope of protection of the present disclosure. Therefore, the scope of protection of the present disclosure should be defined by the scope of protection of the claims.

### Industrial applicability

The method and the device for cluster classifying virus files according to the present disclosure, may be performed by a computer automatically to analyze the binary data of the virus files and perform the classification based on the binary data, thus it is able to enhance the efficiency for the cluster classification of computer virus files, and reduce resource consumption including the consumption for human resources, time resources, computer resources and so on.

Compared with the cluster classification in the prior art in which dynamical running of the virus files is required, in the present disclosure a static analysis is utilized to compare the binary portable executable (PE) structure data of the virus files or to further perform blocked hash comparison on section data, and then the virus files meeting a specified similarity are classified into the same category. Thus it is able to avoid the risk of virus infection caused by dynamical running of the virus files.

## Claims

1. A method for cluster classifying portable executable, PE, virus files, comprising:
A: statically analyzing binary data of virus files which need to be classified, so as to obtain portable executable structure data of the virus files;
B: comparing the portable executable structure data of the virus files which need to be classified, and classifying virus files which have the portable executable structure data meeting a specified similarity condition into a same category; and
C: performing a secondary cluster classification on the virus files in each of the categories classified in the step B, wherein for the virus files in a same category classified in the step B, the secondary cluster classification comprises:
C1: statically analyzing binary data of each of the virus files to obtain section data of each virus file;
C2: performing block-division on the section data of each virus file with a same block division mode, and calculating a hash value of each section data block; and
C3: comparing the hash values of the section data blocks for the virus files, and classifying virus files of which the hash values of the section data blocks have a specified hash similarity into a secondary category, wherein the similarity is represented by the number of the data blocks same for the two compared virus files, or by the number of the consecutive data blocks same for the two compared virus files.

2. The method according to claim 1, wherein the step B comprises:
B1: setting a first virus file as a central file of a new category;
B2: comparing the portable executable structure data of a next virus file with the portable executable structure data of central files of respective categories in sequence; if the PE structure data of the next virus file has the specified similarity with the PE structure data of the central file of one category, classifying the next virus file into the one category and performing step B3; and if the PE structure data of the next virus file does not have the specified similarity with the PE structure data of the central file of any one of the categories, setting the next virus file as the central file of a new category and performing step B3; and
B3: determining whether there is an additional next virus file, if there is the additional next virus file, returning to the step B2; if there is not the additional next virus file, ending this process.

3. The method according to claim 2, wherein the step B further comprises:
determining whether the number of the virus files in the respective categories is within a specified numeric range, and if the number of the virus files in a category is within the specified numeric range, re-determining the central file of the category.

4. The method according to claim 3, wherein the re-determining the central file of the category comprises:
obtaining the similarities between the portable executable structure data of respective virus files in the category; obtaining a sum of similarity by adding up the similarities between the portable executable structure data of each virus file and the portable executable structure data of other virus files; and setting the virus file having the maximum sum of similarity as the central file of the category.

5. The method according to claim 1, wherein the portable executable structure data is any one or any combination of DOS header, PE header, and section table information.

6. The method according to claim 1, wherein the step C3 comprises:
C31: setting a first virus file as a central file of a new secondary category;
C32: comparing the hash values of the section data blocks of a next virus file with the hash values of the section data blocks of the central files of respective secondary categories in sequence, and if the hash values of the section data blocks of the next virus file have the specified hash similarity with the hash values of the section data blocks of the central file of a secondary category, classifying the next virus file into the secondary category and performing step C33; if the hash values of the section data blocks of the next virus file do not have the specified hash similarity with the hash values of the section data blocks of the central file of a secondary category, setting the next virus file as the central file of a new secondary category and performing step C33; and
C33: determining whether there is an additional next virus file, if there is the additional next virus file, returning to the step C32; there is not the additional next virus file, ending the process of step C33.

7. The method according to claim 6, wherein the step C33 further comprises:
determining whether the number of the virus files in respective secondary categories is within a specified numeric range, and if the number of the virus files in a secondary category is within the specified numeric range, re-determining the central file of the secondary category.

8. The method according to claim 7, wherein the re-determining the central file of the secondary category comprises:
obtaining the similarities between the hash values of the section data blocks of respective virus files in the secondary category; obtaining a sum of hash similarity by adding up the similarities between the hash values of the section data blocks of each virus file and the hash values of the section data blocks of other virus files; and setting the virus file having the maximum sum of hash similarity as the central file of the secondary category.

9. The method according to claim 1, wherein determining whether the hash values of the section data blocks of the virus files have the specified hash similarity comprises:
comparing hash values of corresponding section data blocks for two virus files, and if the number of the section data blocks of which the hash values are the same between the two virus files exceeds a specified threshold, determining that the hash values of the section data blocks of the two virus files have the specified hash similarity.

10. A device for cluster classifying portable executable, PE, virus files, comprising:
a first data analyzing module, configured to statically analyze binary data of virus files which need to be classified to extract portable executable structure data of the virus files;
a first cluster classification module, configured to compare the portable executable structure data of the virus files which need to be classified, and to classify virus files which have portable executable structure data meeting a specified similarity condition into a same category; and
a second data analysis module, configured to statically analyze binary data of each of the virus files to obtain section data of the virus files;
a block-division module, configured to perform block-division on the section data of each virus file with a same block division mode, and to calculate a hash value of each section data block; and
a second cluster classification module, configured to compare the hash values of the section data blocks of the virus files, and to classify virus files of which the hash values of the section data blocks have a specified hash similarity into a secondary category, wherein the similarity is represented by the number of the data blocks same for the two compared virus files, or by the number of the consecutive data blocks same for the two compared virus files.

## Patentansprüche

1. Verfahren zur Cluster-Klassifizierung von portablen ausführbaren, PE, Virusdateien, umfassend:
A: Statisches Analysieren von Binärdaten von zu klassifizierenden Virusdateien, um portable ausführbare Strukturdaten der Virusdateien zu erhalten;
B: Vergleichen der portablen ausführbaren Strukturdaten der zu klassifizierenden Virusdateien, und Einordnen von Virusdateien, welche die portablen ausführbaren Strukturdaten aufweisen, die eine bestimmte Ähnlichkeitsbedingung erfüllen, in dieselbe Kategorie; und
C: Durchführen einer sekundären Cluster-Klassifizierung der Virusdateien in jeder der in Schritt B eingeteilten Kategorien, wobei für die in Schritt B in dieselbe Kategorie eingeteilten Virusdateien die sekundäre Cluster-Klassifizierung umfasst:
C1: statisches Analysieren von Binärdaten jeder der Virusdateien, um Sektionsdaten jeder Virusdatei zu erhalten;
C2: Durchführen einer Blockteilung der Sektionsdaten jeder Virusdatei mit demselben Blockteilungsmodus und Berechnen eines Hash-Werts jedes Sektionsdatenblocks; und
C3: Vergleichen der Hash-Werte der Sektionsdatenblöcke für die Virusdateien, und Einordnen von Virusdateien, bei denen die Hash-Werte der Sektionsdatenblöcke eine bestimmte Hash-Ähnlichkeit aufweisen, in eine sekundäre Kategorie, wobei die Ähnlichkeit durch dieselbe Anzahl der Datenblöcke für die beiden verglichenen Virusdateien oder durch dieselbe Anzahl der aufeinanderfolgenden Datenblöcke für die beiden verglichenen Virusdateien repräsentiert wird.

2. Verfahren nach Anspruch 1, wobei Schritt B umfasst:
B1: Festlegen einer ersten Virusdatei als zentrale Datei einer neuen Kategorie;
B2: Vergleichen der portablen ausführbaren Strukturdaten einer nächsten Virusdatei der Reihe nach mit den portablen ausführbaren Strukturdaten von zentralen Dateien jeweiliger Kategorien; wenn die PE-Strukturdaten der nächsten Virusdatei die bestimmte Ähnlichkeit mit den PE-Strukturdaten der zentralen Datei einer Kategorie aufweisen, Einordnen der nächsten Virusdatei in die eine Kategorie und Ausführen von Schritt B3; und wenn die PE-Strukturdaten der nächsten Virusdatei nicht die bestimmte Ähnlichkeit mit den PE-Strukturdaten der zentralen Datei irgendeiner der Kategorien aufweisen, Festlegen der nächsten Virusdatei als zentrale Datei einer neuen Kategorie, und Ausführen von Schritt B3; und
B3: Bestimmen, ob eine zusätzliche nächste Virusdatei vorhanden ist, und falls eine zusätzliche nächste Virusdatei vorhanden ist, Zurückkehren zum Schritt B2; falls keine zusätzliche nächste Virusdatei vorhanden ist, Beenden dieses Prozesses.

3. Verfahren nach Anspruch 2, wobei Schritt B ferner umfasst:
Bestimmen, ob die Anzahl der Virusdateien in den jeweiligen Kategorien innerhalb eines bestimmten Zahlenbereichs liegt, und wenn die Anzahl der Virusdateien in einer Kategorie innerhalb des bestimmten Zahlenbereichs liegt, Neubestimmen der zentralen Datei der Kategorie.

4. Verfahren nach Anspruch 3, wobei das Neubestimmen der zentralen Datei der Kategorie umfasst:
Erhalten der Ähnlichkeiten zwischen den portablen ausführbaren Strukturdaten jeweiliger Virusdateien in der Kategorie; Erhalten einer Summe der Ähnlichkeit durch Aufaddieren der Ähnlichkeiten zwischen den portablen ausführbaren Strukturdaten jeder Virusdatei und den portablen ausführbaren Strukturdaten anderer Virusdateien; und Festlegen der Virusdatei mit der maximalen Summe der Ähnlichkeit als zentrale Datei der Kategorie.

5. Verfahren nach Anspruch 1, wobei es sich bei den portablen ausführbaren Strukturdaten um beliebige Elemente oder eine beliebige Kombination aus DOS-Header, PE-Header und Sektionstabelleninformationen handelt.

6. Verfahren nach Anspruch 1, wobei Schritt C3 umfasst:
C31: Festlegen einer ersten Virusdatei als zentrale Datei einer neuen sekundären Kategorie;
C32: Vergleichen der Hash-Werte der Sektionsdatenblöcke einer nächsten Virusdatei der Reihe nach mit den Hash-Werten der Sektionsdatenblöcke der zentralen Dateien jeweiliger sekundärer Kategorien, und wenn die Hash-Werte der Sektionsdatenblöcke der nächsten Virusdatei die bestimmte Hash-Ähnlichkeit mit den Hash-Werten der Sektionsdatenblöcke der zentralen Datei einer sekundären Kategorie aufweisen, Einordnen der nächsten Virusdatei in die sekundäre Kategorie und Ausführen von Schritt C33; wenn die Hash-Werte der Sektionsdatenblöcke der nächsten Virusdatei nicht die bestimmte Hash-Ähnlichkeit mit den Hash-Werten der Sektionsdatenblöcke der zentralen Datei einer sekundären Kategorie aufweisen, Festlegen der nächsten Virusdatei als zentrale Datei einer neuen sekundären Kategorie und Ausführen von Schritt C33; und
C33: Bestimmen, ob eine zusätzliche nächste Virusdatei vorhanden ist, und falls eine zusätzliche nächste Virusdatei vorhanden ist, Zurückkehren zum Schritt C32; falls keine zusätzliche nächste Virusdatei vorhanden ist, Beenden des Prozesses von Schritt C33.

7. Verfahren nach Anspruch 6, wobei Schritt C33 ferner umfasst:
Bestimmen, ob die Anzahl der Virusdateien in jeweiligen sekundären Kategorien innerhalb eines bestimmten Zahlenbereichs liegt, und wenn die Anzahl der Virusdateien in einer sekundären Kategorie innerhalb des bestimmten Zahlenbereichs liegt, Neubestimmen der zentralen Datei der sekundären Kategorie.

8. Verfahren nach Anspruch 7, wobei das Neubestimmen der zentralen Datei der sekundären Kategorie umfasst:
Erhalten der Ähnlichkeiten zwischen den Hash-Werten der Sektionsdatenblöcke jeweiliger Virusdateien in der sekundären Kategorie; Erhalten einer Summe der Hash-Ähnlichkeit durch Aufaddieren der Ähnlichkeiten zwischen den Hash-Werten der Sektionsdatenblöcke jeder Virusdatei und den Hash-Werten der Sektionsdatenblöcke anderer Virusdateien; und Festlegen der Virusdatei mit der maximalen Summe der Hash-Ähnlichkeit als zentrale Datei der sekundären Kategorie.

9. Verfahren nach Anspruch 1, wobei das Bestimmen, ob die Hash-Werte der Schnittdatenblöcke der Virusdateien die bestimmte Hash-Ähnlichkeit aufweisen, umfasst:
Vergleichen von Hash-Werten entsprechender Sektionsdatenblöcke für zwei Virusdateien, und wenn die Anzahl der Sektionsdatenblöcke, deren Hash-Werte zwischen den beiden Virusdateien gleich sind, einen bestimmten Schwellenwert überschreitet, Bestimmen, dass die Hash-Werte der Sektionsdatenblöcke der beiden Virusdateien die bestimmte Hash-Ähnlichkeit aufweisen.

10. Vorrichtung zur Cluster-Klassifizierung von portablen ausführbaren, PE, Virusdateien, aufweisend:
ein erstes Datenanalysemodul, das dazu ausgelegt ist, zu klassifizierende Binärdaten von Virusdateien statisch zu analysieren, um portable ausführbare Strukturdaten der Virusdateien zu extrahieren;
ein erstes Cluster-Klassifizierungsmodul, das dazu ausgelegt ist, die portablen ausführbaren Strukturdaten der zu klassifizierenden Virusdateien zu vergleichen und Virusdateien, die portable ausführbare Strukturdaten aufweisen, die eine bestimmte Ähnlichkeitsbedingung erfüllen, in dieselbe Kategorie einzuordnen; und
ein zweites Datenanalysemodul, das dazu ausgelegt ist, binäre Daten jeder der Virusdateien statisch zu analysieren, um Sektionsdaten der Virusdateien zu erhalten;
ein Blockteilungsmodul, das dazu ausgelegt ist, eine Blockteilung der Sektionsdaten jeder Virusdatei mit demselben Blockteilungsmodus durchzuführen und einen Hash-Wert für jeden Sektionsdatenblock zu berechnen; und
ein zweites Cluster-Klassifizierungsmodul, das dazu ausgelegt ist, die Hash-Werte der Sektionsdatenblöcke der Virusdateien zu vergleichen und Virusdateien, bei denen die Hash-Werte der Sektionsdatenblöcke eine bestimmte Hash-Ähnlichkeit aufweisen, in eine sekundäre Kategorie einzuordnen, wobei die Ähnlichkeit durch dieselbe Anzahl der Datenblöcke für die beiden verglichenen Virusdateien oder durch dieselbe Anzahl der aufeinanderfolgenden Datenblöcke für die beiden verglichenen Virusdateien repräsentiert wird.

## Revendications

1. Procédé de classification de regroupement de fichiers de virus Portable Exécutable, PE, comprenant :
A : l'analyse statique de données binaires de fichiers de virus qui doivent être classifiés, de façon à obtenir des données de structure Portable Exécutable des fichiers de virus ;
B : la comparaison des données de structure Portable Exécutable des fichiers de virus qui doivent être classifiés, et la classification dans une même catégorie de fichiers de virus dont les données de structure Portable Exécutable remplissent une condition de similarité spécifiée ; et
C : l'exécution d'une classification de regroupement secondaire sur les fichiers de virus classifiés dans chacune des catégories à l'étape B, sachant que, pour les fichiers de virus classifiés dans une même catégorie à l'étape B, la classification de regroupement secondaire comprend :
C1 : l'analyse statique de données binaires de chacun des fichiers de virus pour obtenir des données de section de chaque fichier de virus ;
C2 : l'exécution d'une division en blocs sur les données de section de chaque fichier de virus avec un même mode de division en blocs, et le calcul d'une valeur de hachage de chaque bloc de données de section ; et
C3 : la comparaison des valeurs de hachage des blocs de données de section pour les fichiers de virus, et la classification dans une catégorie secondaire de fichiers de virus dont les valeurs de hachage des blocs de données de section ont une similarité de hachage spécifiée, sachant que la similarité est représentée par le nombre des blocs de données qui sont les mêmes pour les deux fichiers de virus comparés ou par le nombre des blocs de données consécutifs qui sont les mêmes pour les deux fichiers de virus comparés.

2. Le procédé selon la revendication 1, sachant que l'étape B comprend :
B1 : l'établissement d'un premier fichier de virus comme étant un fichier central d'une nouvelle catégorie ;
B2 : la comparaison en séquence des données de structure Portable Exécutable d'un prochain fichier de virus avec les données de structure Portable Exécutable de fichiers centraux de catégories respectives ; si les données de structure PE du prochain fichier de virus présentent la similarité spécifiée avec les données de structure PE du fichier central d'une catégorie, la classification du prochain fichier de virus dans l'une catégorie et l'exécution de l'étape B3 ; et si les données de structure PE du prochain fichier de virus ne présentent pas la similarité spécifiée avec les données de structure PE du fichier central de l'une quelconque des catégories, l'établissement du prochain fichier de virus comme étant le fichier central d'une nouvelle catégorie et l'exécution de l'étape B3 ; et
B3 : le fait de déterminer s'il existe un prochain fichier de virus supplémentaire ; si le prochain fichier de virus supplémentaire existe, retour à l'étape B2 ; si le prochain fichier de virus supplémentaire n'existe pas, fin de ce processus.

3. Le procédé selon la revendication 2, sachant que l'étape B comprend en outre :
le fait de déterminer si le nombre des fichiers de virus dans les catégories respectives est compris dans une plage numérique spécifiée, et si le nombre des fichiers de virus dans une catégorie est compris dans la plage numérique spécifiée, la redétermination du fichier central de la catégorie.

4. Le procédé selon la revendication 3, sachant que la redétermination du fichier central de la catégorie comprend :
l'obtention des similarités entre les données de structure Portable Exécutable de fichiers de virus respectifs dans la catégorie ; l'obtention d'une somme de similarité en additionnant les similarités entre les données de structure Portable Exécutable de chaque fichier de virus et les données de structure Portable Exécutable d'autres fichiers de virus ; et l'établissement du fichier de virus présentant la somme maximale de similarité comme étant le fichier central de la catégorie.

5. Le procédé selon la revendication 1, sachant que les données de structure Portable Exécutable sont l'une quelconque ou une combinaison quelconque d'une en-tête DOS, d'une en-tête PE, et d'informations de table de section.

6. Le procédé selon la revendication 1, sachant que l'étape C3 comprend :
C31 : l'établissement d'un premier fichier de virus comme étant un fichier central d'une nouvelle catégorie secondaire ;
C32 : la comparaison en séquence des valeurs de hachage des blocs de données de section d'un prochain fichier de virus avec les valeurs de hachage des blocs de données de section des fichiers centraux de catégories secondaires respectives, et si les valeurs de hachage des blocs de données de section du prochain fichier de virus présentent la similarité de hachage spécifiée avec les valeurs de hachage des blocs de données de section du fichier central d'une catégorie secondaire, la classification du prochain fichier de virus dans la catégorie secondaire et l'exécution de l'étape C33 ; si les valeurs de hachage des blocs de données de section du prochain fichier de virus ne présentent pas la similarité de hachage spécifiée avec les valeurs de hachage des blocs de données de section du fichier central d'une catégorie secondaire, l'établissement du prochain fichier de virus comme étant le fichier central d'une nouvelle catégorie secondaire et l'exécution de l'étape C33 ; et
C33 : le fait de déterminer s'il existe un prochain fichier de virus supplémentaire ; si le prochain fichier de virus supplémentaire existe, retour à l'étape C32 ; si le prochain de fichier de virus supplémentaire n'existe pas, fin du processus de l'étape C33.

7. Le procédé selon la revendication 6, sachant que l'étape C33 comprend en outre :
le fait de déterminer si le nombre des fichiers de virus dans des catégories secondaires respectives est compris dans une plage numérique spécifiée, et si le nombre des fichiers de virus dans une catégorie secondaire est compris dans la plage numérique spécifiée, la redétermination du fichier central de la catégorie secondaire.

8. Le procédé selon la revendication 7, sachant que la redétermination du fichier central de la catégorie secondaire comprend :
l'obtention des similarités entre les valeurs de hachage des blocs de données de section de fichiers de virus respectifs dans la catégorie secondaire ; l'obtention d'une somme de similarité de hachage en additionnant les similarités entre les valeurs de hachage des blocs de données de section de chaque fichier de virus et les valeurs de hachage des blocs de données de section d'autres fichiers de virus ; et l'établissement du fichier de virus présentant la somme maximale de similarité de hachage comme étant le fichier central de la catégorie secondaire.

9. Le procédé selon la revendication 1, sachant que le fait de déterminer si les valeurs de hachage des blocs de données de section des fichiers de virus présentent la similarité de hachage spécifiée comprend :
la comparaison de valeurs de hachage de blocs de données de section correspondants pour deux fichiers de virus, et si le nombre des blocs de données de section dont les valeurs de hachage sont les mêmes entre les deux fichiers de virus dépasse un seuil spécifié, le fait de déterminer que les valeurs de hachage des blocs de données de section des deux fichiers de virus ont la similarité de hachage spécifiée.

10. Dispositif de classification de regroupement de fichiers de virus Portable Exécutable, PE, comprenant :
un premier module d'analyse de données configuré pour analyser statiquement des données binaires de fichiers de virus qui doivent être classifiés afin d'extraire des données de structure Portable Exécutable des fichiers de virus ;
un premier module de classification de regroupement configuré pour comparer les données de structure Portable Exécutable des fichiers de virus qui doivent être classifiés et pour classifier dans une même catégorie des fichiers de virus dont les données de structure Portable Exécutable remplissent une condition de similarité spécifiée ; et
un deuxième module d'analyse de données configuré pour analyser statiquement des données binaires de chacun des fichiers de virus afin d'obtenir des données de section des fichiers de virus ;
un module de division en blocs configuré pour effectuer une division en blocs sur les données de section de chaque fichier de virus avec un même mode de division en blocs et pour calculer une valeur de hachage de chaque bloc de données de section ; et
un deuxième module de classification de regroupement configuré pour comparer les valeurs de hachage des blocs de données de section des fichiers de virus et pour classifier dans une catégorie secondaire des fichiers de virus dont les valeurs de hachage des blocs de données de section présentent une similarité de hachage spécifiée, sachant que la similarité est représentée par le nombre des blocs de données qui sont les mêmes pour les deux fichiers de virus comparés ou par le nombre des blocs de données consécutifs qui sont les mêmes pour les deux fichiers de virus comparés.
